# EUROPEAN PATENT SPECIFICATION

(11) **EP 1 506 655 B1**
(45) Date of publication and mention of the grant of the patent: **01.08.2007**
(21) Application number: 03725452.1
(22) Date of filing: 22.05.2003
(51) Int. Cl.: H04L 27/34

(54) **MODIFIED PSK CONSTELLATION TO FACILITATE CARRIER RECOVERY**
MODIFIZIERTE PSK-KONSTELLATION ZUR ERLEICHTERUNG DER TRÄGERRÜCKGEWINNUNG
CONSTELLATION MDP MODIFIEE FACILITANT LA RECUPERATION DE PORTEUSE

(30) Priority: 22.05.2002 GB 0211767
(43) Date of publication of application: 16.02.2005
(73) Proprietor: Tandberg Television ASA, 1326 Lysaker (NO)
(72) Inventor: BEECH, Brian, Herbert, Hampshire SO50 6NR (GB)
(74) Representative: Molyneaux, Martyn William
(86) International application number: PCT/GB2003/002248
(87) International publication number: WO 2003/098892

(56) References cited:
- DE-A- 3 243 373
- US-A- 5 500 875
- US-A- 5 838 734
- US-A- 5 974 090

## Description

This invention relates to communicating a digital signal. In particular, the invention relates to carrier signal generation and recovery for higher order modulation systems.

It is a requirement for any modulation scheme that, as the received signal to noise ratio (SNR) is reduced, the carrier synchronisation should not fail before the forward error correction (FEC) decoding fails. In a phase shift keyed (PSK) modulation scheme, failure of carrier synchronisation or lock occurs as a result of a low SNR in combination with the presence of phase noise on the received signal. Loss of carrier synchronisation generally manifests itself as cycle slips which cause burst errors and these result in failure of the Reed-Solomon code and sometimes complete synchronisation failure of the system. Operation at low code rates, i.e. at high redundancy where the number of transmitted bits is much higher than the number of information bits, puts a requirement on the carrier recovery loop to operate with low values of signal to noise ratio (SNR). The use of new codes, for example turbo codes, imposes the requirement to operate at even lower values of SNR.

Many users are considering upgrading from quadrature phase shift keyed (QPSK) to 8-state phase shift keyed (8PSK) modulation and there is interest in the use of other higher order modulations, for example 16-state quadrature amplitude modulation (16QAM). Unfortunately the practical experience of 8PSK has shown that relatively low levels of phase noise can cause carrier recovery failure. Operation at low symbol rates, i.e. low rates at which symbols are transmitted, further increases the sensitivity to phase noise to the extent that operation on some satellite links may not be possible. For example operation of turbo coded 8PSK, rate 2/3 (i.e. three transmitted bits for every two information bits) at 5MSym/s requires phase noise levels better than can be easily achieved on typical satellite links and better than the Intelsat Earth Station Standard (IESS) 308. In order to guarantee reliable operation of such systems, a high level of performance is required of all elements in a transmission chain. The use of phase locked low noise block down-converters (LNBs) may be required to reduce phase noise. The disadvantage of this type of LNB is a higher cost compared with non-phase locked down-converters typically used for domestic satellite receivers.

Contrary to expectation, 16QAM, although sensitive to phase noise, is generally more tolerant of phase noise than 8PSK (or higher order PSK).

US 5,974,090 discloses use of an asymmetric constellation in which, preferably, all the constellation signal points lie on a circle centred on the origin, which is then mirrored to form constellation pseudo-signal points so that a symmetric constellation of signal points and pseudo-signal points is used for transmission. The asymmetric constellation of signal points is re-formed from the symmetric constellation on reception.

US 5,500,875 discloses a coding technique for QAM systems which does not require differential encoding. Constellation points are chosen such that the set is not symmetrical such that successive rotations about the axes of symmetry of the constellation do not create identical signals. During synchronization of a receiver, a received constellation is rotated until the defected signal matches a known output, to determine the rotation of the constellation.

It is an object of the present invention at least to mitigate the aforesaid disadvantages in the prior art.

Therefore, it is an object of the invention to provide a method of carrier recovery for PSK signals which allows operation with substantially higher levels of phase noise than is normally possible. Although the invention is illustrated in relation to 8PSK, the invention can be applied to any PSK modulation. The same principles could be applied to other modulations e.g. 16QAM, but with possible degradation of digital performance. The invention has applications for professional links particularly for operation of satellite transponders in multi-carrier mode, since in these cases the symbol rate may be low. This is because in single carrier mode a satellite transponder is normally filled with one carrier operating at a high symbol rate, whereas in multi-carrier mode the transponder is filled with multiple carriers and each one operates at a lower symbol rate. The symbol rate of each carrier is reduced as the number of carriers increases. The invention has particular application for consumer applications where it is desirable to have a high level of phase noise tolerance in order to allow the use of low cost technology for down-converter local oscillators. This may be particularly important for KA band satellite links where low levels of phase noise are difficult to achieve.

A further object of this invention is to provide a modification to a PSK signal for which the required S/N ratio for system failure is lower that that for unmodified PSK.

Another object of this invention is to produce a carrier recovery circuit for which there are no phase ambiguities, that is having a phase locked loop with only one stable lock position. This is advantageous for subsequent signal processing, for example for FEC decoding, since there is no requirement to resolve phase ambiguities. This can lead to faster system lock up times which may be required in some applications.

Conventional n-level PSK (NPSK) carrier recovery algorithms have well-known false lock positions at multiples of 1/N * symbol rate. This invention provides a carrier recovery means which will not false lock allows faster carrier lock because the algorithms normally required to escape from false locks are not required.

According to a first aspect of the invention the invention there is provided a system for communicating a digital signal, the system comprising: a) phase shift key modulating means for modulating the digital signal with an asymmetric constellation pattern to produce a phase shift keyed signal and a carrier signal said constellation pattern having at least one constellation point of lower energy than the remaining constellation points; b) signal processing means to process the phase shift keyed signal and carrier signal to produce a transmission signal with no, or a sufficiently weak, carrier signal component to substantially prevent interference with co-transmitted services; c) transmission means for transmitting the transmission signal to a receiver; d) receiving means at the receiver for receiving the phase shift keyed signal and regenerating a sufficiently strong carrier signal from the transmission signal; to permit demodulation; and demodulation means for using the strong carrier signal for phase locking the receiver to demodulate the phase shift keyed signal.

Advantageously, the at least one constellation point of reduced amplitude is zeroed.

Conveniently, the signal processing means is adapted for periodically changing the mapping of the asymmetric constellation to reduce the carrier signal component of the transmission signal.

Advantageously, the signal processing means is adapted for changing the mapping of the asymmetric constellation for each symbol to be transmitted.

Preferably, the signal processing system is adapted for changing the mapping according to a pseudo-random binary sequence.

Preferably, changing of the mapping is achieved by phase rotation.

Advantageously, the signal processing means is adapted for the insertion of unmodified symbols among symbols modified by use of the asymmetric constellation pattern.

Conveniently, the signal processing means is adapted to allow variation of the ratio of modified symbols to unmodified symbols to optimize performance of the system.

Advantageously, the receiving means is synchronizable with the transmitting means by the transmission from the transmitting means to the receiving means of a predetermined sequence of modified and unmodified symbols.

Conveniently, the signal processing means comprises: a first mapping block connected to an input port for producing unmodified PSK symbols and a second mapping block connected to the input port for producing PSK symbols modified by the zeroing of at least one constellation state of the PSK constellation; selector means connected to the first and second mapping blocks for selectively receiving unmodified or modified symbols under the control of parameter-controlled synchronizing means, phase rotator means connected to the selector means for receiving the selected symbols from the selector to rotate the constellation of the selected symbol under the control of a pseudo-random bit sequence generator connected to the phase rotator and controlled by the synchronization means to output to an output port modified and unmodified symbols having pseudo-randomly rotated constellations.

Alternatively, the signal processing means comprises: a programmable mapping block connected to an input port for selectively producing unmodified PSK symbols or PSK symbols modified by the zeroing of at least one constellation state of the PSK constellation; under the control of parameter-controlled synchronizing means, phase rotator means connected to the programmable mapping block for receiving symbols from the programmable mapping block to rotate the constellation of the symbols under the control of a pseudo-random bit sequence generator connected to the phase rotator and controlled by the synchronization means to output to an output port modified and unmodified symbols having pseudo-randomly rotated constellations.

Preferably, a parameter controlling the parameter-controlled synchronizing means is a predetermined ratio of modified symbols to unmodified symbols.

Preferably, the receiving means comprises de-rotator means for receiving a complex signal and for implementing rotations which are multiples of π/4 for inputting to carrier recovery loop means.

Advantageously, the de-rotator means is under the control of pseudo random bit sequence generator means, controlled by synchronization detector means controlled by magnitude detector means for detecting the magnitude of received symbols to detect a predetermined sequence of modified and unmodified symbols.

Conveniently, the carrier recovery loop comprises a complex multiplier with a phase locked feedback loop, a pattern noise canceller, a first selector under the control of the synchronization detector for selectively routing the signal to one of a first de-mapping block for de-mapping unmodified symbols and a second de-mapping block for de-mapping modified symbols and a second selector under control of the synchronization detector for selectively receiving output from the first and second de-mapping blocks and outputting a received symbol to an output port.

Alternatively, the carrier recovery loop comprises a complex multiplier with a phase locked feedback loop, a pattern noise canceller, a programmable de-mapping block under the control of the synchronization detector for selectively de-mapping unmodified symbols or de-mapping modified symbols and outputting a received symbol to an output port.

Advantageously, the pattern noise canceller comprises a phase detector controlling a phase shifter, wherein the output from the phase detector is fed forward to the phase shifter to cancel pattern noise.

According to a second aspect of the invention there is provided a transmitter for generating a phase shift keyed (PSK) signal and carrier signal to transmit a transmission signal with no, or a sufficiently weak, carrier signal component substantially to prevent interference with co-transmitted services, the transmitter comprising: a first mapping block connected to an input port for producing unmodified PSK symbols and a second mapping block connected to the input port for producing PSK symbols modified by reducing the amplitude of at least one constellation state of a PSK constellation pattern, said constellation pattern having at least one constellation point of a lower energy than the remaining constellation points; selector means connected to the first and second mapping blocks for selectively receiving unmodified or modified symbols under the control of parameter-controlled synchronizing means, phase rotator means connected to the selector means for receiving the selected symbols from the selector to rotate the constellation of the selected symbol under the control of a pseudo-random bit sequence generator connected to the phase rotator and controlled by the synchronization means to output to an output port modified and unmodified symbols having pseudo-randomly rotated constellations.

Alternatively, the first mapping block, the second mapping block and the selector are replaced by a programmable mapping block for selectively producing unmodified PSK symbols or PSK symbols modified by zeroing of at least one constellation state of a PSK constellation under the control of parameter-controlled synchronizing means.

Preferably, a parameter controlling the parameter-controlled synchronizing means is a predetermined ratio of modified symbols to unmodified symbols.

According to a third aspect of the invention, there is provided a receiver for carrier recovery from a phase shift keyed transmission signal according to claim 21.

Advantageously, the carrier recovery loop comprises a complex multiplier with a phase locked feedback loop, a pattern noise canceller, a first selector under the control of the synchronization detector for selectively routing the signal to one of a first de-mapping block for de-mapping unmodified symbols and a second de-mapping block for de-mapping modified symbols and a second selector under control of the synchronization detector for selectively receiving output from the first and second de-mapping blocks and outputting a received symbol to an output port.

Alternatively, the first selector, the first de-mapping block, the second demapping block and the second selector are replaced by a programmable de-mapping block for selectively de-mapping unmodified symbols or demapping modified signals under the control of the synchronization detector.

Conveniently, the pattern noise canceller comprises a phase detector controlling a phase shifter, wherein the output from the phase detector is fed forward to the phase shifter to cancel pattern noise.

According to a fourth aspect of the invention, there is provided a method for communicating a digital signal according to claim 25.

Advantageously, the at least one constellation point of reduced amplitude has zero amplitude.

Conveniently, the step of processing the phase shift keyed signal and carrier signal comprises periodically changing mapping of the asymmetric constellation to reduce the carrier signal component of the transmission signal.

Advantageously, the step of processing the phase shift keyed signal and carrier signal comprises changing the mapping of the asymmetric constellation for each symbol transmitted.

Conveniently, the step of processing the phase shift keyed signal and carrier signal comprises changing the mapping according to a pseudo-random binary sequence.

Preferably, the step of processing the phase shift keyed signal and carrier signal comprises changing the mapping by phase rotation.

Advantageously, the step of processing the phase shift keyed signal and carrier signal comprises inserting for transmission unmodified symbols among symbols modified by use of the asymmetric constellation pattern.

Advantageously, the step of processing the phase shift keyed signal and carrier signal comprises varying a ratio of modified symbols bo unmodified symbols to optimize performance of the method.

Conveniently, the step of receiving comprises the step of synchronising the receiving means with the transmitting means by the transmission from the transmitting means to the receiving means of a predetermined sequence of modified and unmodified symbols.

Conveniently, the step of phase shift key modulating the digital signal with an asymmetric constellation pattern comprises: using a first mapping block connected to an input port for producing unmodified PSK symbols and using a second mapping block connected to the input port for producing PSK symbols modified by the zeroing of at least one constellation state of the PSK constellation; and the step of processing the phase shift keyed signal and carrier signal comprises using selector means connected to the first and second mapping blocks for selectively receiving unmodified or modified symbols under the control of parameter-controlled synchronizing means, using phase rotator means connected to the selector means for receiving the selected symbols from the selector to rotate the constellation of the selected symbol under the control of a pseudo-random bit sequence generator connected to the phase rotator means and controlled by the synchronization means and outputting to an output port modified and unmodified symbols having pseudo-randomly rotated constellations.

Alternatively, the step of phase shift key modulating the digital signal with an asymmetric constellation pattern comprises: using a programmable mapping block, under the control of parameter-controlled synchronizing means, connected to an input port for selectively producing unmodified PSK symbols or for producing PSK symbols modified by the zeroing of at least one constellation state of the PSK constellation; and the step of processing the phase shift keyed signal and carrier signal comprises selectively receiving unmodified or modified symbols at a phase rotator means connected to programmable mapping block, rotating the constellation of the selected symbol under the control of a pseudo-random bit sequence generator connected to the phase rotator means and controlled by the synchronization means and outputting to an output port modified and unmodified symbols having pseudo-randomly rotated constellations.

Preferably, the step of selectively receiving unmodified or modified symbols under the control of parameter-controlled synchronizing means comprises using a predetermined ratio of modified symbols to unmodified symbols as a parameter for controlling the parameter-controlled synchronizing means.

Advantageously, the step of receiving comprises using de-rotator means for receiving a complex signal and for implementing rotations which are multiples of π/4 for inputting to a carrier recovery loop means.

Conveniently, the step of using de-rotator means comprises using de-rotator means under the control of pseudo random bit sequence generator means, controlled by a synchronization detector means controlled by magnitude detector means for detecting the magnitude of received symbols to detect a predetermined sequence of modified and unmodified symbols.

Conveniently, the step of inputting to the carrier recovery loop means comprises inputting to a carrier loop recovery means comprising a complex multiplier with a phase locked feedback loop, a pattern noise canceller, a first selector under the control of the synchronization detector means for selectively routing the signal to one of a first de-mapping block for de-mapping unmodified symbols and a second de-mapping block for de-mapping modified symbols and a second selector under control of the synchronization detector means for selectively receiving output from the first and second de-mapping blocks and outputting a received symbol to an output port.

Alternatively, the first de-mapping block, the second de-mapping block and the second selector may be replaced by a programmable de-mapping block for selectively de-mapping unmodified symbols or modified symbols under control of the synchronization detector means.

Advantageously, the pattern noise canceller comprises a phase detector controlling a phase shifter, wherein the output from the phase detector is fed forward to the phase shifter to cancel pattern noise.

The invention will now be described, by way of example, with reference to the accompanying drawings in which:
Figure 1 shows a constellation of allowed states for a known 8PSK signal as a plot of imaginary parts of the signal as ordinates against real parts as abscissa;
Figure 2a is a block diagram of a known carrier recovery loop for use with the constellation of allowed states shown in Figure 1;
Figure 2b is a plot of phase comparator output as ordinates against phase shift in degrees as abscissa for the phase comparator used in the known carrier recovery loop of Figure 2a;
Figure 3 shows a constellation of allowed states according to the invention as a plot of imaginary parts of a signal as ordinates against real parts as abscissa, in which point 1 has been remapped to point 9;
Figure 4 shows a block diagram of a transmitter according to the invention;
Figure 5 is a block diagram of a receiver according to the invention;
Figure 6 shows a constellation of allowed states at an output of the de-rotator of the receiver of Figure 5;
Figure 7 is a plot of bit error rate (BER) as ordinates against signal to noise ratio (SNR) in dB as abscissa for a conventional 8PSK signal and for 8PSK signals modified according to the invention;
Figure 8 is a plot of simulated results using the invention, showing no cycle slips; and
Figure 9 is a plot of simulated results for conventional 8PSK carrier recovery, showing cycle slips.

In the figures, like reference numerals represent like parts.

The invention is described herein in relation to 8PSK signals, but it will be understood by one skilled in the art that the invention can be applied to other orders of PSK.

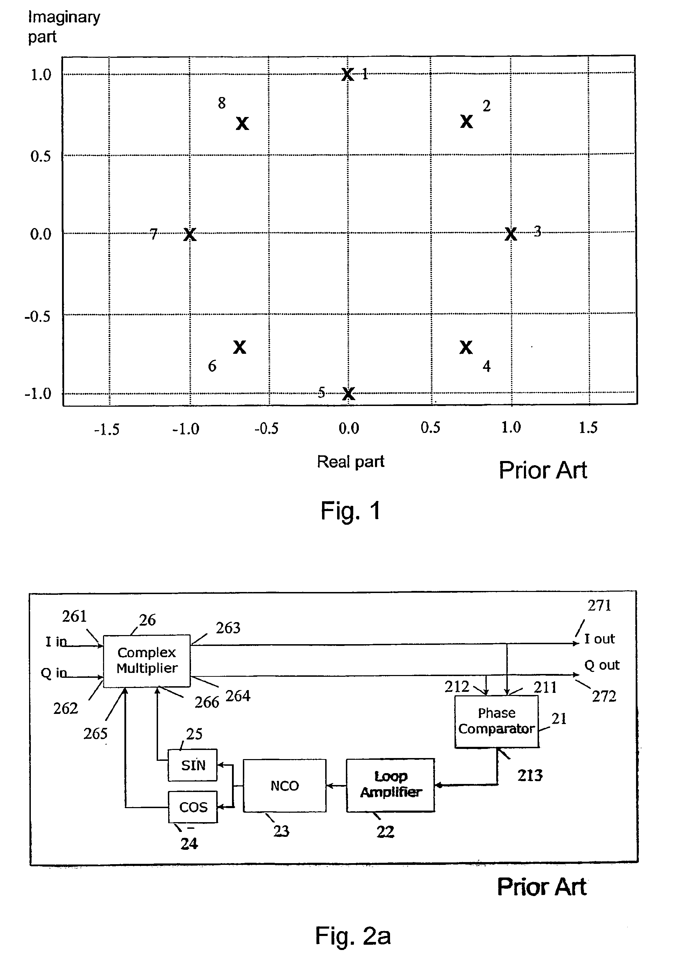

A constellation, i.e. a plot of allowed phase shift values or states 10 in terms of real and imaginary parts of the signal, for a known 8PSK signal, is shown in Figure 1. A block diagram of a digital implementation of a carrier recovery loop according to well-known prior art, for use with the constellation of Figure 1, is shown in Figure 2a. Alternatively, analogue implementations may be used. It will be understood that Figure 1 indicates Cartesian representation of complex signals with I and Q imaginary and real vectors which are shown as inputs Iᵢₙ and Qᵢₙ to the carrier recovery loop of Figure 2a. Other representations, such as polar coordinates, may alternatively be used. Referring to Figure 2a, a complex multiplier 26 has an imaginary vector input 261, a real vector input 262, an imaginary vector output 263 and a real vector output 264. The imaginary vector output 263, as well as being connected to an imaginary vector output port 271 of the carrier loop is also connected to an imaginary vector input 211 of a phase comparator 21 and the real vector output 264, as well as being connected to an real vector output port 272 of the carrier loop is also connected to an imaginary vector input 212 of the phase comparator 21. An output 213 of the phase comparator 21 is connected to an input of a loop amplifier 22, an output of which is connected to a numerically controlled oscillator (NCO) 23. An output of the numerically controlled oscillator is input to sine and cosine look-up tables 25, 24 which are connected to secondary inputs 265, 266 of the complex multiplier 26.

In use, the phase comparator 21 generates an output which is a measure of the phase of the incoming signal Iᵢₙ, Qᵢₙ. An output of phase comparator 21 is fed into the loop amplifier 22, which typically generates an output signal comprising a sum of a proportional term and an integral term relating to well-known second order phase lock loop equations. This form of loop amplifier results in a second order feedback loop, but feedback loops with different orders may also be used. The output of loop amplifier 22 is fed to the numerically controlled oscillator 23, an output of which feeds the sine and cosine took-up tables 25 and 24. The NCO outputs a sawtooth waveform and the sine and cosine look-up tables convert the sawtooth wave into sine and cosine waves. This output of the look up tables feeds the complex multiplier 26 to complete the feedback loop.

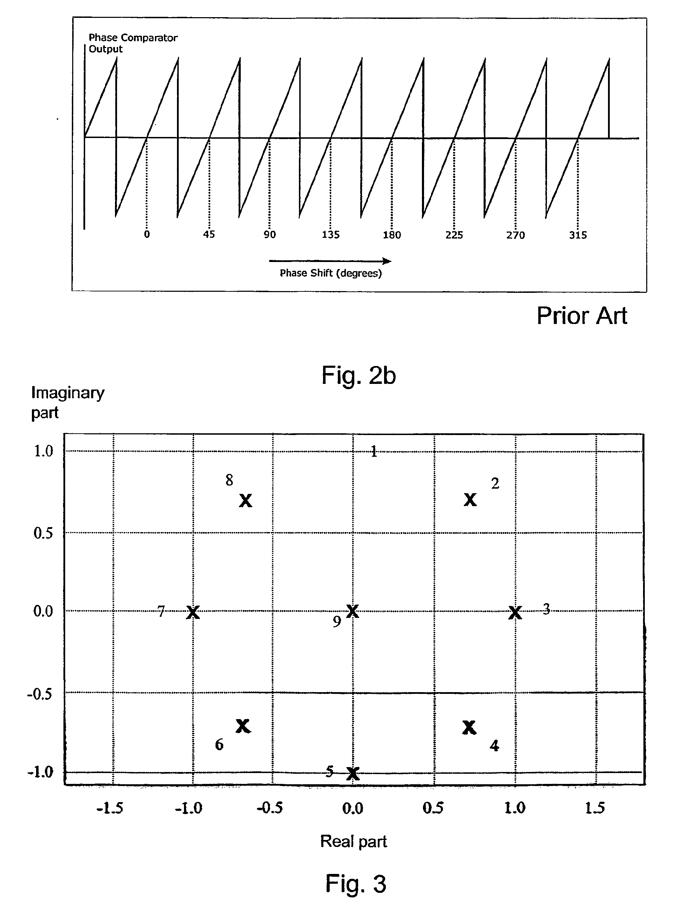

The phase comparator 21 typically has a characteristic which is cyclic in 45-degrees. An example of such a characteristic is shown in Fig 2b. The loop can lock in one of eight phase positions. A cycle slip occurs when the loop temporarily unlocks and re-locks in a new phase position. A main factor influencing cycle slips is the phase comparator. For low values of SNR the phase comparator characteristic will change - the gain will reduce and the characteristic will change shape. The phase comparator characteristic changes for low SNR because the thermal noise causes the input signal vector randomly to fall in the wrong 45 degree phase segment. When the phase comparator output is filtered the effect is to generate a response which no longer conforms to the classic response shown in Figure 2b. Thus, when the thermal phase noise level becomes large in relation to the 45-degree range of the phase comparator, then anomalies occur. These anomalies will induce a cycle slip if a sufficiently high level of phase noise is present. This is a fundamental disadvantage with the simple approach of the prior art shown.

A modified constellation, having allowed states 2-9, for use with the invention, is shown in Figure 3. This constellation has two special features. Firstly, the average power of the signal is reduced to 7/8 of the power of an unmodified signal, i.e. by 0.58dB, because the constellation point normally in position 1 has been removed from the outside circle and has been re-mapped to the centre of the circle at position 9, that is the amplitude of the signal at position 9 is zero. Alternatively, the amplitude of constellation point 1 may be reduced to a non-zero value.

Secondly, due to the asymmetry of the constellation, there is a carrier component which is approximately 9.6dB lower than the average power of the signal. This is because the power of the carrier component is equal to the power of one point of the 8PSK constellation, so the power of the carrier component is 10* log (1/8) = -9.03 dB. Therefore the power of the carrier component relative to the power of the 9PSK signal is -9.03 -0.58 = -9.61dB. According to an aspect of the invention, a carrier recovery circuit is provided in a receiver which will lock to this carrier component, as described below.

On real satellite links it is not permissible for a signal to include a carrier component at this high level. This potentially would cause interference with other services and could cause difficulties in some receiver designs where the base-band signal is AC coupled. Different satellite operators set different requirements but typically the carrier component is required to be -30dB to -40 dB compared with the total signal strength and this range of values is to be understood by a weak carrier signal component herein. In order to overcome this difficulty a further modification of the signal is applied. The constellation mapping is changed on a symbol by symbol basis. Referring to Figure 3, nine possible combinations of constellation point constellations are possible by setting none or one of the points to the zero position 9:
a) 12345678
b) 2345678 9
c) 3456781 9
d) 4567812 9
e) 5678123 9
f) 6781234 9
g) 7812345 9
h) 8123456 9
i) 1234567 9

It will be noted that constellation point positions c) - i) can be generated by using mapping b) and applying a phase rotation to the signal. Constellation a) is the standard, unmodified 8PSK constellation.

In addition to random selection of the mappings b) to i), mapping a) is inserted at intervals. The ratio of the total number of constellations to the number of modified constellations b) to i) is referred to herein as M. For M=1, every symbol is of the modified type. For M=3 there are two standard symbols for every modified symbol. The parameter M allows a degree of flexibility to optimise system performance.

The embodiment of the invention described uses a phase rotation method. In order to prevent the generation of discrete frequency components in the transmitted signal, the rotation is changed according to a defined pseudo-random sequence at the transmitter. At a receiver, a corresponding pseudo-random sequence is used to de-rotate the signal to restore a constellation as shown in Figure 3. It should be noted that the signal which is transmitted over a transmission channel therefore has either no or only a very low level of carrier component which will not interfere with other services. However, a received signal after the de-rotation process has a strong carrier component which is used for carrier recovery.

The de-rotator in the receiver is synchronised to the rotator in the transmitter. Timing lock in the receiver can be maintained without carrier lock in a known manner. For this reason, the system is robust. If the carrier loop is not locked or suffers a cycle slip, then the de-rotating sequence is not corrupted.

In an embodiment of the invention, synchronisation is achieved by transmitting a known sequence of symbol types, i.e. a sequence of modified and unmodified symbols, as a synchronisation word. In the receiver, a magnitude detector monitors the magnitude of the received signal on a symbol by symbol basis. In one embodiment of the invention the output of the magnitude detector is processed by an averaging function in order to reduce the random influences of the channel data and of the transmission channel thermal noise. The output of the averaging function is compared against a threshold using a comparator. Considering that the average magnitude of a modified symbol is 7/8 times the magnitude of an unmodified symbol, then the output of the comparator can be made to be an indication of symbol type, i.e. whether modified or unmodified. This signal is compared against the known transmitted symbol sequence and when a match is found, the starting point of the pseudo-random binary sequence (PRBS) is reset.

Reliable information as to the type of each individual symbol is obtained from the state of the PRBS generator in combination with the knowledge of the transmitted symbol sequence. This information is used for demapping the signal.

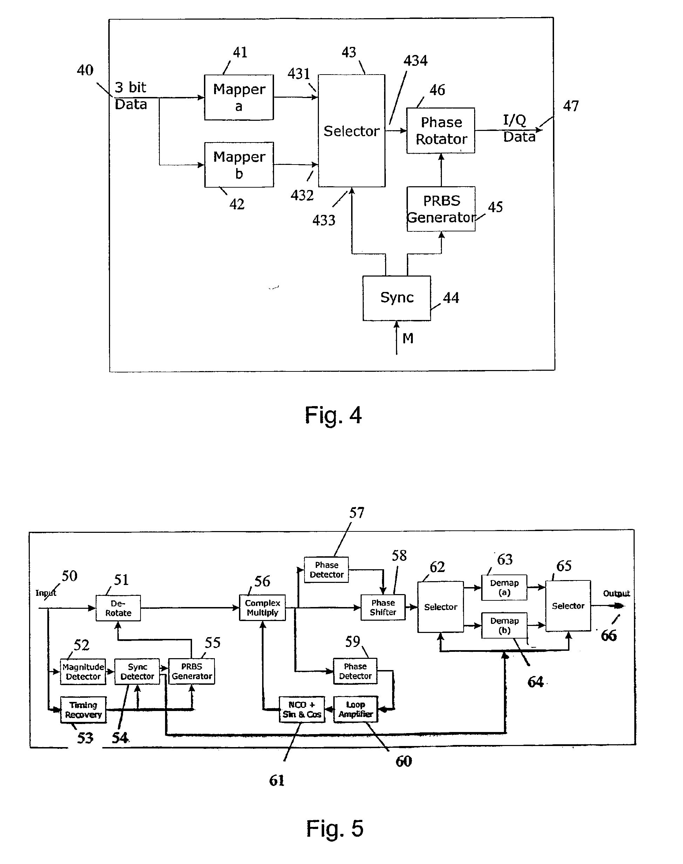

Figs 4 and 5 illustrate a transmitter and receiver respectively for use in the invention.

Referring to Figure 4, an input port 40 is connected in parallel to inputs of a first mapping block 41 and a second mapping block 42 respectively. Outputs of the first and second mapping block 41, 42 are connected to respective inputs 431, 432 of a selector 43. An output of a synchroniser 44 is also connected to a synchronising port 433 of the selector. An output 434 of the selector 43 is connected to an input of a phase rotator 46 having an output to an I/Q output port 47. The output of the synchroniser 44 is also connected to an input of a pseudo-random binary sequence (PRBS) generator 45, an output of which is connected to a second input of the phase rotator 46.

In use, three bit data received at the input port 40 of the transmitter is passed to the mapping blocks 41,42 which correspond to mappings a and b, i.e. corresponding respectively to unmodified and modified constellations and symbols. The selector 43 selects which mapping is used, under the control of the synchronisation block 44. A parameter M, which determines the ratio of unmodified symbols to modified symbols, is input to the synchronisation block 44. This synchronisation block 44 also controls synchronisation of the PRBS generator 45. An output of PRBS generator 45 has 8 states which control phase rotation by the phase **rotator 46.**

It will be understood that in the transmitter, the first and second mapping blocks may be replaced by a programmable mapping block, under the control of the synchronisation block 44, which selectively maps modified or unmodified symbols, thereby dispensing with the requirement for the selector 43.

Consider now the receiver block diagram Figure 5. An input port 50 is connected in parallel to inputs of a de-rotator 51, a magnitude detector 52 and a timing recovery block 53. An output of the magnitude detector 52 is connected to a first input of a synchronisation detector 54 and an output of the timing recovery block 53 is connected in parallel to a second input of the synchronisation detector 54 and a first input of a pseudo-random bit sequence generator (PRBS) 55. A first output of the synchronisation detector 54 is connected to a second input of the PRBS generator 55.

An output of the de-rotator 51 is connected to a first input of a complex multiplier 56. An output of the complex multiplier 56 is connected in parallel to inputs of a first phase detector 57, a phase shifter 58 and a second phase detector 59. An output of the second phase detector 59 is connected to an input of a loop amplifier 60 an output of which is connected to a numerically controlled oscillator (NCO) 61 having sine and cosine look-up tables. Output from the NCO is fed back to a second input of the complex multiplier.

An output of the first phase detector 57 is connected to a second input of the phase shifter 58. An output of the phase shifter 58 is connected to a first selector 62, outputs from which are connected to a first de-mapping block 63 and a second de-mapping block 64 respectively. Outputs of the first and second de-mapping blocks are connected to respective inputs of a second selector 65. An output of the second selector 65 is connected to an output port 66 of the receiver. A second output of the synchronisation detector 54 is connected in parallel to synchroniser input ports of the first and second selectors 62, 65 respectively.

In use, an input signal to the receiver is a complex signal which could be either in Cartesian or polar representation. This signal is first filtered by a receiver root-cosine Nyquist filter, not shown. The input signal is passed through the de-rotator block 51 which implements rotations which are multiples of π/4. The rotation is controlled from the PRBS generator 55. Synchronisation with the PRBS generator 55 in the transmitter is achieved by the magnitude detector 52 in combination with synchronisation detector 54.

The ratio M of unmodified to modified symbols received may be pre-set or may be determined by the receiver by measuring the proportion of modified to unmodified symbols received.

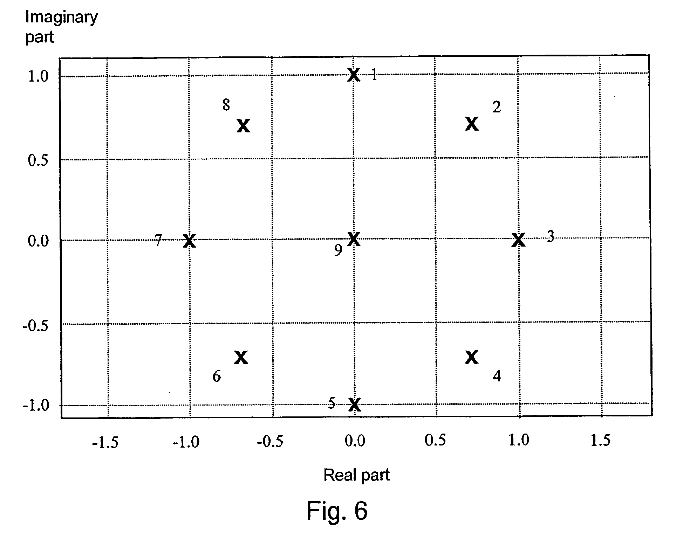

If the ratio of total symbols to modified symbols (M) is not infinite (i.e. if there are some modified symbols), then the constellation at the output of the de-rotator 51 appears as shown in Figure 6. The output of the de-rotator 51 feeds into the carrier recovery loop consisting of complex multiplier 56, phase detector 59, loop amplifier 60, and NCO with sine and cosine look-up tables 61. The phase detector 59 is cyclic in 360 degrees and operates on the carrier component of the signal.

In order to minimise generation of pattern noise by this loop a pattern noise canceller is included comprising the first phase detector 57 and the phase shifter 58. The first phase detector 57 is a conventional 8PSK phase detector cyclic in 45-degrees. Other types of phase detector may alternatively be used. The output of the first phase detector 57 is fed forward to the phase shifter 58 to cancel the pattern noise. Since the first phase detector gain will change with S/N ratio, the first phase detector has a programmable gain controlled from the received S/N ratio of the signal. The S/N ratio information is derived from a demodulator section of the receiver (not shown).

Output of the phase shifter 58 is fed to the first selector 62 which routes the signal to the de-mappers 63, 64. The outputs of the de-mappers are fed to the second selector 65, which provides the output to the decoder. For turbo code operation, the de-mappers 63, 64 will generate soft decision data.

It will be understood that in the receiver, the first and second de-mapping blocks 63,64 may be replaced by a programmable de-mapping block which selectively de-maps modified or unmodified symbols, under control of the synchronization detector 54 thereby dispensing with the requirement for first and second selectors 62,65.

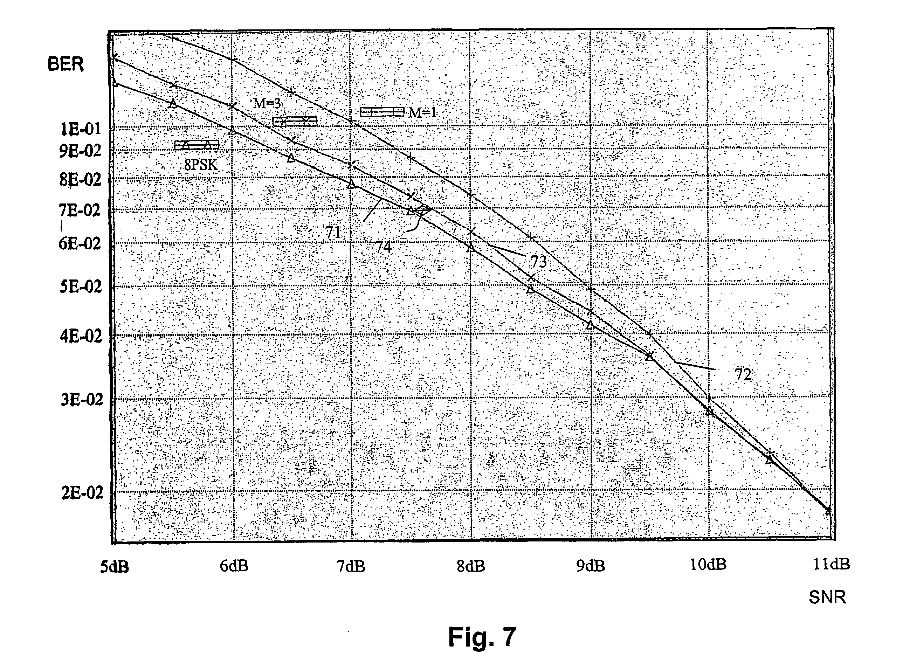

Figure 7 shows curves of un-coded bit error rate (BER) plotted against signal to noise ratio (SNR) measured in relation to peak power. This relates to the case of single carrier transmission. Curves are shown for M=infinity (conventional 8PSK case) 71, M=1 (all symbols are modified) 72 and M=3 73. For conventional 8PSK, the S/N failure points for turbo decoding are approximately:

| | |
|---|---|
| Rate 2/3 | 7.5dB |
| Rate 5/6 | 10.0dB |
| Rate 8/9 | 11.0dB |

Referring to Fig 7, this means that at rate 2/3, i.e. 7.5dB, for M=3 the invention incurs a performance penalty of 0.2dB, as indicated by double headed arrow 74 in Figure 7, which is being exchanged for the improved phase noise performance. For code rates 5/6, i.e. 10dB, and 8/9, i.e. 11dB, there is no significant penalty since the plots for conventional carrier recovery and for M=3 virtually overlap at these values.

For satellite transmission in multi-carrier per transponder mode, M=1 is recommended. In this case the system is average power limited and the SNR figures of Fig 7 for the M=1 case should be reduced by 0.58dB to allow for the reduced power in the modified constellation. Taking this into account, there is no significant penalty for the rate 2/3 case. For rate 5/6 there is a performance improvement compared to conventional 8PSK of around 0.4dB. For rate 8/9 there is a performance improvement of around 0.55dB. So in these cases for multi-carrier transmission, not only is carrier recovery performance improved, but the system thermal noise failure point is also improved.

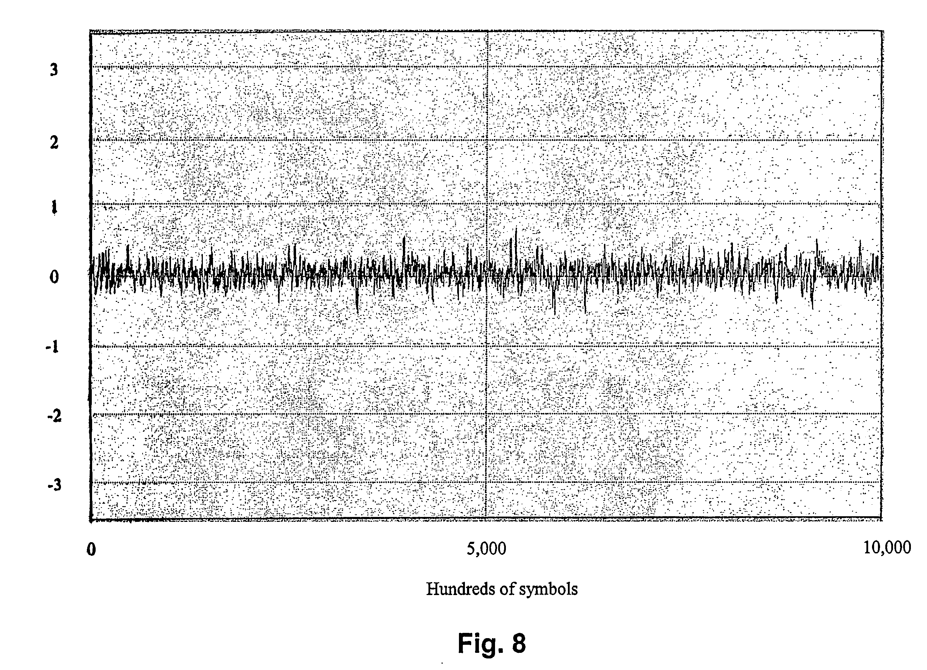

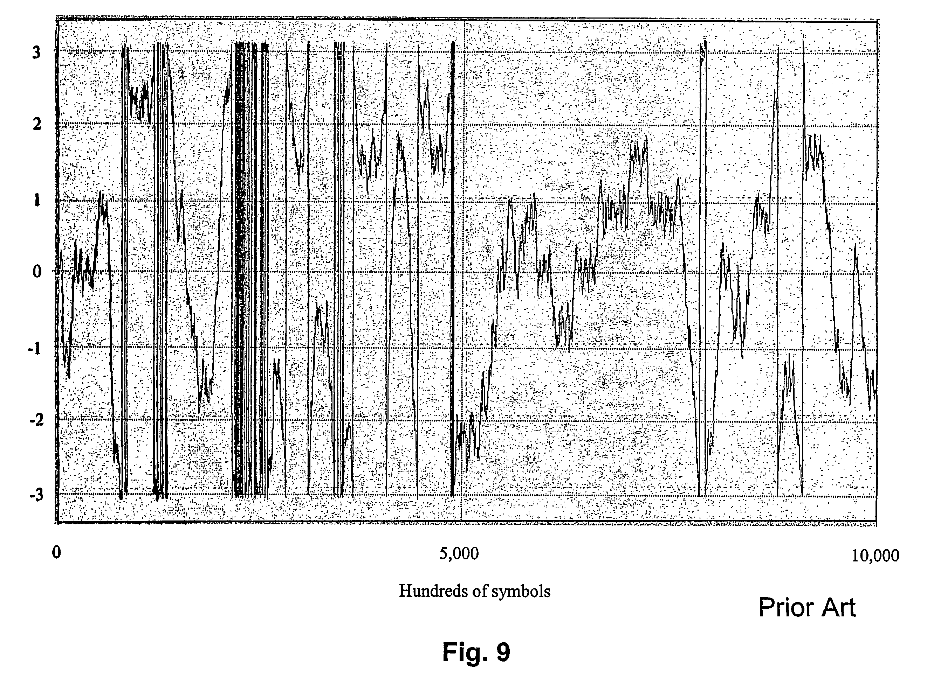

Figs 8, 9, which are plotted for every hundredth symbol, show simulated results for cycle slip using a carrier recovery loop according to the invention and using prior art respectively. The conditions of the simulation are as follows.
1) Symbol rate = 5 MSym/s.
2) SNR = 7.5dB.
3) Phase noise = -74dBc/Hz at 10KHz offset. Phase noise falling at the rate of 20dB per decade.
4) M=3

Fig 8 shows that over the period of the simulation (200 ms of real time), no cycle slips occurred using the invention. Fig 9 shows that using the prior art, large numbers of cycle slips occur. The cycle slips appear as a step change in phase (vertical axis). The smallest steps seen here correspond to a cycle slip of 45 degrees. Close examination shows that there are some phase slips which are multiples of the 45 degree slip. Statistically 45 degree slips occur most frequently. The larger the phase slip the less frequently it occurs. Thus the cycle slips are not always 45degrees (0.78 radians) but are multiples of this. Additionally the prior art case of Figure 9 shows loss of lock events. Loss of lock events are indicated by bursts where the phase cycles through the full phase range. In Figure 9, these bursts can be seen to occur with varying durations. A simulation of ten seconds of real time using the invention shows no cycle slips or loss of lock events.

The results show that a communications system using the invention will accept phase noise levels in the region of 10 to 20dB higher than a prior art system before cycle slip occurs. Simulations have been done with phase noise falling off at 20 dB per decade. These simulations show that the cycle slip performance at a symbol rate of SMsymbols/sec is better than the prior art operating at a symbol rate of 30 WymboLs/sec. The theoretical relation between symbol rate (Rs) and phase noise for this case is 20* log Rs. We have 20* log (30/6) =15.6dB. In practice phase noise will not always fall at 20dB per decade and so this is only an approximate assessment. Therefore the figure 10-20dB is an approximation to cover the range of practical cases.

When cycle slip does occur, the slip is 360 degrees and the FEC decoder can immediately continue to decode correctly without re-synchronising. Furthermore the carrier lock provided by the invention does not have false lock positions. The system of the invention has only one stable lock position. Each time a signal is applied to the carrier recovery loop it will lock the signal in the same phase. For the prior art the loop will lock in one of 8 possible phases, and only one of these will result in correct decoding of the signal. As a separate issue, the invention will always lock to the centre frequency of the transmitted signal. In the prior art a system may lock at the centre frequency but also has false locks falling at multiples of symbol rate/8 from centre.

## Claims

1. A system for communicating a digital signal, the system comprising:
a) phase shift key modulating means for modulating the digital signal with an asymmetric constellation pattern to produce a phase shift keyed signal and a carrier signal, said constellation pattern having at least one constellation point of a lower energy than the remaining constellation points;
b) signal processing means (40-47) to process the phase shift keyed signal and carrier signal to produce a transmission signal with no, or a sufficiently weak, carrier signal component to substantially prevent interference with co-transmitted services;
c) transmission means for transmitting the transmission signal to a receiver;
d) receiving means (50-66) at the receiver for receiving the phase shift keyed signal and regenerating a sufficiently strong carrier signal from the transmission signal to permit demodulation; and
e) demodulation means for using the carrier signal for phase locking the receiver to demodulate the phase shift keyed signal.

2. A system as claimed in claim 1, wherein the at least one constellation point has substantially zero energy.

3. A system as claimed in claim 1 or 2, wherein the signal processing means is adapted for periodically changing mapping of the asymmetric constellation to reduce the carrier signal component of the transmission signal.

4. A system as claimed in claim 3, wherein the signal processing means is adapted for changing the mapping of the asymmetric constellation for each symbol transmitted.

5. A system as claimed in claims 3 or 4, wherein the signal processing system is adapted for changing the mapping according to a pseudorandom binary sequence.

6. A system as claimed in any of claims 3 to 5, wherein the signal processing means is adapted for changing of the mapping by phase rotation.

7. A system as claimed in any of the preceding claims, wherein the signal processing means is adapted for the insertion for transmission of unmodified symbols among symbols modified by use of the asymmetric constellation pattern.

8. A system as claimed in claim 7, wherein the signal processing means is adapted to allow variation of the ratio of modified symbols to unmodified symbols to optimize performance of the system.

9. A system as claimed in any of the preceding claims, wherein the receiving means is synchronizable with the transmitting means by the transmission from the transmitting means to the receiving means of a predetermined sequence of modified and unmodified symbols.

10. A system as claimed in any of the preceding claims, wherein the signal processing means comprises: a first mapping block (41) connected to an input port (40) for producing unmodified PSK symbols and a second mapping block (42) connected to the input port for producing PSK symbols modified by the zeroing of at least one constellation state of the PSK constellation; selector means (43) connected to the first and second mapping blocks for selectively receiving unmodified or modified symbols under the control of parameter-controlled synchronizing means, phase rotator means (46) connected to the selector means for receiving selected symbols from the selector to rotate the constellation of the selected symbol under the control of a pseudo-random bit sequence generator (45) connected to the phase rotator and controlled by the synchronization means (44) to output to an output port (47) modified and unmodified symbols having pseudo-randomly rotated constellations.

11. A system as claimed in any of claims 1 to 9, wherein, the signal processing means comprises: a programmable mapping block connected to an input port (40) for selectively producing unmodified PSK symbols or PSK symbols modified by the zeroing of at least one constellation state of the PSK constellation; under the control of parameter-controlled synchronizing means (44), phase rotator means (46) connected to the programmable mapping block for receiving symbols from the programmable mapping block to rotate the constellation of the symbols under the control of a pseudo-random bit sequence generator connected to the phase rotator and controlled by the synchronization means (44) to output to an output port (47) modified and unmodified symbols having pseudo-randomly rotated constellations.

12. A system as claimed in claims 10 or 11, wherein a parameter controlling the parameter-controlled synchronizing means (44) is a predetermined ratio of modified symbols to unmodified symbols.

13. A system as claimed in any of the preceding claims, wherein the receiving means comprises de-rotator means (51) for receiving a complex signal and for implementing rotations which are multiples of π/4 for inputting to carrier recovery loop means.

14. A system as claimed in claim 13, wherein the de-rotator means (51) is under the control of pseudo random bit sequence generator means (55), controlled by synchronization detector means (54) controlled by magnitude detector means (52) for detecting the magnitude of received symbols to detect a predetermined sequence of modified and unmodified symbols.

15. A system as claimed in claims 13 or 14, wherein the carrier recovery loop means comprises a complex multiplier (56) with a phase locked feedback loop (59, 60, 61), a pattern noise canceller (57, 58), a first selector (54) under the control of the synchronization detector means for selectively routing the signal to one of a first de-mapping block (63) for de-mapping unmodified symbols and a second de-mapping block (64) for de-mapping modified symbols and a second selector (65) under control of the synchronization detector means (54) for selectively receiving output from the first and second de-mapping blocks and outputting a received symbol to an output port (66).

16. A system as claimed in claims 13 or 14, wherein, the carrier recovery loop comprises a complex multiplier (56) with a phase locked feedback loop (59, 60, 61), a pattern noise canceller (57, 58), a programmable de-mapping block under the control of the synchronization detector (54) for selectively de-mapping unmodified symbols or de-mapping modified symbols and outputting the de-mapped symbol to an output port.

17. A system as claimed in claims 15 or 16 wherein the pattern noise canceller comprises a phase detector (57) controlling a phase shifter (58), and the output from the phase detector is fed forward to the phase shifter to cancel pattern noise.

18. A transmitter for use in a system according to claim 1 for generating a phase shift keyed (PSK) signal and carrier signal to transmit a transmission signal with no, or a sufficiently weak, carrier signal component to substantially prevent interference with co-transmitted services, the transmitter comprising: a first mapping block (41) connected to an input port (40) for producing unmodified PSK symbols and a second mapping block (42) connected to the input port (40) for producing PSK symbols modified by reducing the amplitude of at least one constellation state of the PSK constellation pattern, said constellation pattern having at least one constellation point of a lower energy than the remaining constellation points; selector means (43) connected to the first and second mapping blocks for selectively receiving unmodified or modified symbols under the control of parameter-controlled synchronizing means (44), phase rotator means (46) connected to the selector means for receiving the selected symbols from the selector to rotate the constellation of the selected symbol under the control of a pseudorandom bit sequence generator (45) connected to the phase rotator and controlled by the synchronization means to output to an output port modified and unmodified symbols having pseudo-randomly rotated constellations.

19. A transmitter as claimed in claim 18, wherein the first mapping block (41), the second mapping block (42) and the selector (43) are replaced by a programmable mapping block for selectively producing unmodified PSK symbols or PSK symbols modified by zeroing the energy of at least one constellation state of a PSK constellation under the control of the parameter-controlled synchronizing means.

20. A transmitter as claimed in claims 18 or 19, wherein a parameter controlling the parameter-controlled synchronizing means (44) is a predetermined ratio of modified symbols to unmodified symbols.

21. A receiver for use in a system according to claim 1 for carrier recovery rom a phase shift keyed transmission signal having an asymmetric constellation pattern with at least one constellation point having a lower energy than the remaining constellation points and with no, or a sufficiently weak, carrier signal component to substantially prevent interference with co-transmitted services, the receiver comprising a de-rotator means (51) for receiving a complex signal and for implementing rotations which are multiples of π/4 for inputting to a carrier recovery loop means, wherein the de-rotator means is under the control of pseudo random bit sequence generator means (55), controlled by a synchronization detector means (54) controlled by magnitude detector means (52) for detecting magnitudes of received symbols to detect a predetermined sequence of modified and unmodified symbols.

22. A receiver as claimed in claim 21, wherein the carrier recovery loop comprises a complex multiplier (56) with a phase locked feedback loop (59, 60, 61), a pattern noise canceller, a first selector (62) under the control of the synchronization detector means (54) for selectively routing the signal to one of a first de-mapping block (63) for demapping unmodified symbols and a second de-mapping block (64) for de-mapping modified symbols and a second selector (65) under control of the synchronization detector means (54) for selectively receiving output from the first and second de-mapping blocks and outputting a received symbol to an output port (66).

23. A receiver as claimed in claim 22, wherein the first selector (62), the first de-mapping block (63), the second de-mapping block (64) and the second selector (65) are replaced by a programmable de-mapping block under control of the synchronization detector means (54), for selectively demapping unmodified symbols or de-mapping modified signals.

24. A receiver as claimed in claims 22 or 23 wherein the pattern noise canceller comprises a phase detector (57) controlling a phase shifter (58), wherein the output from the phase detector is fed forward to the phase shifter to cancel pattern noise.

25. A method for communicating a digital signal, the method comprising the steps of:
a) phase shift key modulating the digital signal with an asymmetric constellation pattern to produce a phase shift keyed signal and a carrier signal, said constellation pattern having at least one constellation point of a lower energy than the remaining constellation points;
b) processing the phase shift keyed signal and carrier signal to produce a transmission signal with no, or a sufficiently weak, carrier signal component to substantially prevent interference with co-transmitted services;
c) transmitting the transmission signal to a receiver;
d) receiving at the receiver the phase shift keyed signal and regenerating a sufficiently strong carrier signal from the transmission signal to permit demodulation; and
e) using the strong carrier signal for phase locking the receiver to demodulate the phase shift keyed signal.

26. A method as claimed in claim 25, wherein the at least one constellation point has substantially zero energy.

27. A method as claimed in claims 25 to 26, wherein the step of processing the phase shift keyed signal and carrier signal comprises periodically changing mapping of the asymmetric constellation to reduce the carrier signal component of the transmission signal.

28. A method as claimed in claim 27, wherein the step of processing the phase shift keyed signal and carrier signal comprises changing the mapping of the asymmetric constellation for each symbol transmitted.

29. A method as claimed in claims 27 or 28, wherein the step of processing the phase shift keyed signal and carrier signal comprises changing the mapping according to a pseudorandom binary sequence.

30. A method as claimed in any of claims 27 to 29, wherein the step of processing the phase shift keyed signal and carrier signal comprises changing the mapping by phase rotation.

31. A method as claimed in any of claims 25 to 30, wherein the step of processing the phase shift keyed signal and carrier signal comprises inserting for transmission unmodified symbols among the symbols modified by use of the asymmetric constellation pattern.

32. A method as claimed in claim 31, wherein the step of processing the phase shift keyed signal and carrier signal comprises selecting a ratio of modified symbols to unmodified symbols to optimize performance of the method.

33. A method as claimed in any of claims 25 to 32, wherein the step of receiving comprises the step of synchronising the receiving means with the transmitting means by the transmission from the transmitting means to the receiving means of a predetermined sequence of modified and unmodified symbols.

34. A method as claimed in any of claims 25 to 33, wherein the step of phase shift key modulating the digital signal with an asymmetric constellation pattern comprises: using a first mapping block (41) connected to an input port (40) for producing unmodified PSK symbols and using a second mapping block (42) connected to the input port (40) for producing PSK symbols modified by the zeroing of at least one constellation state of the PSK constellation; and the step of processing the phase shift keyed signal and carrier signal comprises using selector means (43) connected to the first and second mapping blocks for selectively receiving unmodified or modified symbols under the control of parameter-controlled synchronizing means (44), using phase rotator means (46) connected to the selector means (43) for receiving the selected symbols from the selector to rotate the constellation of the selected symbol under the control of a pseudorandom bit sequence generator (45) connected to the phase rotator and controlled by the synchronization means and outputting to an output port (47) modified and unmodified symbols having pseudo-randomly rotated constellations.

35. A method as claimed in any of claims 25 to 33, wherein, the step of phase shift key modulating the digital signal with an asymmetric constellation pattern comprises: using a programmable mapping block, under the control of parameter-controlled synchronizing means (44), connected to an input port (40) for selectively producing unmodified PSK symbols or for producing PSK symbols modified by the zeroing of at least one constellation state of the PSK constellation; and the step of processing the phase shift keyed signal and carrier signal comprises selectively receiving unmodified or modified symbols using phase rotator means (46) connected to programmable mapping block for receiving the selected symbols from the mapping block to rotate the constellation of the selected symbol under the control of a pseudo-random bit sequence generator (45) connected to the phase rotator means and controlled by the synchronization means (44) and outputting to an output port (47) modified and unmodified symbols having pseudo-randomly rotated constellations.

36. A method as claimed in claim 34 or 35, wherein the step of selectively receiving unmodified or modified symbols under the control of parameter-controlled synchronizing means (44) comprises using a predetermined ratio of modified symbols to unmodified symbols as a parameter for controlling the parameter-controlled synchronizing means.

37. A method as claimed in any of claims 25 to 36, wherein the step of receiving comprises using de-rotator means (51) for receiving a complex signal and for implementing rotations which are multiples of π/4 for inputting to a carrier recovery loop means.

38. A method as claimed in claim 37, wherein the step of using de-rotator means comprises using de-rotator means (51) under the control of pseudo random bit sequence generator means (55), controlled by a synchronization detector means (54) controlled by magnitude detector means (52) for detecting magnitudes of received symbols to detect a predetermined sequence of modified and unmodified symbols.

39. A method as claimed in claims 37 or 38, wherein the step of inputting to the carrier recovery loop means comprises inputting to a carrier loop recovery means comprising a complex multiplier (56) with a phase locked feedback loop (59, 60, 61), a pattern noise canceller (57, 58), a first selector (62) under the control of the synchronization detector (54) for selectively routing the signal to one of a first de-mapping block (63) for de-mapping unmodified symbols and a second de-mapping block (64) for de-mapping modified symbols and a second selector (65) under control of the synchronization detector (54) for selectively receiving output from the first and second de-mapping blocks and outputting a received symbol to an output port (66).

40. A method as claimed in claim 39, wherein the first de-mapping block (63), the second de-mapping block (64) and the second selector (65) are replaced by a programmable de-mapping block for selectively de-mapping unmodified or modified symbols under control of the synchronization detector means.

41. A method as claimed in claims 39 or 40 wherein the pattern noise canceller comprises a phase detector (57) controlling a phase shifter (58), wherein the output from the phase detector is fed forward to the phase shifter to cancel pattern noise.

## Patentansprüche

1. System zur Kommunikation eines digitalen Signals, wobei das System folgendes umfasst:
a) eine Phasenumtastungs-Modulationseinrichtung zum Modulieren des digitalen Signals mit einem asymmetrischen Konstellationsmuster zur Erzeugung eines phasenumgetasteten Signals und eines Trägersignals, wobei das genannte Konstellationsmuster mindestens einen Konstellationspunkt einer niedrigeren Energie als die restlichen Konstellationspunkte aufweist;
b) eine Signalverarbeitungseinrichtung (40-47) zum Verarbeiten des phasenumgetasteten Signals und des Trägersignals, um ein Übertragungssignal ohne oder mit einer ausreichend schwachen Trägersignalkomponente zu erzeugen, um im Wesentlichen Interferenzen mit gleichzeitig übertragenen Diensten zu verhindern;
c) eine Übertragungseinrichtung zur Übertragung des Übertragungssignals an einen Empfänger;
d) eine Empfangseinrichtung (50-66) an dem Empfänger für den Empfang des phasenumgetasteten Signals und das erneute Erzeugen eines ausreichend starken Trägersignals aus dem Übertragungssignal, um eine Demodulation zu ermöglichen; und
e) eine Demodulationseinrichtung zur Verwendung des Trägersignals für die Phasenverriegelung des Empfängers zum Demodulieren des phasenumgetasteten Signals.

2. System nach Anspruch 1, wobei der mindestens eine Konstellationspunkt im Wesentlichen null Energie aufweist.

3. System nach Anspruch 1 oder 2, wobei die Signalverarbeitungseinrichtung in der Lage ist, periodisch das Mapping der asymmetrischen Konstellation zu verändern, um die Trägersignalkomponente des Übertragungssignals zu reduzieren.

4. System nach Anspruch 3, wobei die Signalverarbeitungseinrichtung in der Lage ist, das Mapping der asymmetrischen Konstellation für jedes übertragene Symbol zu verändern.

5. System nach Anspruch 3 oder 4, wobei das Signalverarbeitungssystem in der Lage ist, das Mapping gemäß einer pseudozufälligen binären Sequenz zu verändern.

6. System nach einem der Ansprüche 3 bis 5, wobei die Signalverarbeitungseinrichtung in der Lage ist, das Mapping durch Phasenrotation zu verändern.

7. System nach einem der vorstehenden Ansprüche, wobei die Signalverarbeitungseinrichtung für das Einfügen geeignet ist, um nicht modifizierte Symbole unter Symbolen zu übertragen, die unter Verwendung des asymmetrischen Konstellationsmusters modifiziert worden sind.

8. System nach Anspruch 7, wobei die Signalverarbeitungseinrichtung eine Anpassung des Verhältnisses der modifizierten Symbole zu den nicht modifizierten Symbolen zur Optimierung der Leistung des Systems ermöglichen kann.

9. System nach einem der vorstehenden Ansprüche, wobei die Empfangseinrichtung mit der Übertragungseinrichtung synchronisiert werden kann, durch die Übertragung einer vorbestimmten Sequenz von modifizierten und nicht modifizierten Symbolen von der übertragenden Einrichtung zu der empfangenden Einrichtung.

10. System nach einem der vorstehenden Ansprüche, wobei die Signalverarbeitungseinrichtung folgendes umfasst: einen ersten Mapping-Block (41), der mit einem Eingangsanschluss (40) verbunden ist, um nicht modifizierte PSK-Symbole zu erzeugen, und einen zweiten Mapping-Block (42), der mit dem Eingangsanschluss verbunden ist, um durch die Nullstellung mindestens eines Konstellationszustands der PSK-Konstellation modifizierte PSK-Symbole zu erzeugen; eine Auswahleinrichtung (43), die mit den ersten und zweiten Mapping-Blöcken verbunden ist, um selektiv nicht modifizierte oder modifizierte Symbole unter der Steuerung einer Parameter gesteuerten Synchronisationseinrichtung zu empfangen, mit einer Phasenrotationseinrichtung (46), die mit der Auswahleinrichtung verbunden ist, um ausgewählte Symbole von der Auswahleinrichtung zu empfangen, um die Konstellation des ausgewählten Symbols zu drehen, gesteuert durch einen Pseudozufalls-Bitfolgegenerator (45), der mit der Phasenrotationseinrichtung verbunden ist, und gesteuert durch die Synchronisationseinrichtung (44), um an einen Ausgangsanschluss (47) modifizierte und nicht modifizierte Symbole mit pseudozufällig gedrehten Konstellationen auszugeben.

11. System nach einem der Ansprüche 1 bis 9, wobei die Signalverarbeitungseinrichtung folgendes umfasst: einen programmierbaren Mapping-Block, der mit einem Eingangsanschluss (40) verbunden ist, um selektiv nicht modifizierte PSK-Symbole oder durch die Nullstellung mindestens eines Konstellationszustands der PSK-Konstellation modifizierte PSK-Symbole zu erzeugen; gesteuert durch die Parameter gesteuerte Synchronisationseinrichtung (44) eine Phasenrotationseinrichtung (46), die mit dem programmierbaren Mapping-Block verbunden ist, um Symbole von dem programmierbaren Mapping-Block zu empfangen, um die Konstellation der Symbole zu drehen, gesteuert durch einen Pseudozufalls-Bitfolgegenerator, der mit der Phasenrotationseinrichtung verbunden ist, und gesteuert durch die Synchronisationseinrichtung (44), um an einen Ausgangsanschluss (47) modifizierte und nicht modifizierte Symbole mit pseudozufällig gedrehten Konstellationen auszugeben.

12. System nach Anspruch 10 oder 11, wobei eine Parametersteuerung der Parameter gesteuerten Synchronisationseinrichtung (44) ein vorbestimmtes Verhältnis modifizierter Symbole zu nicht modifizierten Symbolen darstellt.

13. System nach einem der vorstehenden Ansprüche, wobei die empfangende Einrichtung eine Derotationseinrichtung (51) für den Empfang eines komplexen Signals und für die Implementierung von Rotationen umfasst, die Vielfache von π/4 zur Eingabe in eine Trägerwiederherstellungsschleifeneinrichtung darstellen.

14. System nach Anspruch 13, wobei die Derotationseinrichtung (51) durch die Pseudozufalls-Bitfolge-Generatoreinrichtung (55) gesteuert wird, gesteuert durch eine Synchronisations-Detektoreinrichtung (54), die durch eine Stärkendetektoreinrichtung (52) gesteuert wird, um die Stärke empfangener Symbole zu detektieren, um eine vorbestimmte Sequenz modifizierter und nicht modifizierter Symbole zu detektieren.

15. System nach Anspruch 13 oder 14, wobei die Trägerwiederherstellungsschleifeneinrichtung einen komplexen Multiplizierer (56) mit einer phasensynchronisierten Regelschleife (59, 60, 61) umfasst, eine Aufhebungseinrichtung für periodische Störungen (57, 58), eine erste Auswahleinrichtung (54), gesteuert durch die Synchronisations-Detektoreinrichtung zum selektiven Leiten des Signals zu einem ersten Demapping-Block (63) zum Demapping nicht modifizierter Symbole oder einem zweiten Demapping-Block (64) zum Demapping modifizierter Symbole, und eine zweite Auswahleinrichtung (65), gesteuert durch die Synchronisations-Detektoreinrichtung (54) zum selektiven Empfangen von Ausgaben von den ersten und zweiten Demapping-Blöcken und zum Ausgeben eines empfangenen Symbols an einen Ausgangsanschluss (66).

16. System nach Anspruch 13 oder 14, wobei die Trägerwiederherstellungsschleife einen komplexen Multiplizierer (56) mit einer phasensynchronisierten Regelschleife (59, 60, 61) umfasst, eine Aufhebungseinrichtung für periodische Störungen (57, 58), einen programmierbaren Demapping-Block, gesteuert durch den Synchronisationsdetektor (54) zum selektiven Demapping nicht modifizierter Symbole oder zum Demapping modifizierter Symbole und zur Ausgabe des einem Demapping unterzogenen Symbols an einen Ausgangsanschluss.

17. System nach Anspruch 15 oder 16, wobei die Aufhebungseinrichtung für periodische Störungen einen Phasendetektor (57) umfasst, der einen Phasenschieber (58) steuert, und wobei die Ausgabe des Phasendetektors zu dem Phasenschieber geleitet wird, um periodische Störungen aufzuheben.

18. Sender zum Einsatz in einem System gemäß Anspruch 1 zum Erzeugen eines phasenumgetasteten (PSK) Signals und eines Trägersignals, um ein Übertragungssignal ohne oder mit einer ausreichend schwachen Trägersignalkomponente zu übertragen, um im Wesentlichen Interferenzen mit gleichzeitig übertragenen Diensten zu verhindern, wobei der Sender folgendes umfasst: einen ersten Mapping-Block (41), der mit einem Eingangsanschluss (40) verbunden ist, um nicht modifizierte PSK-Symbole zu erzeugen, und einen zweiten Mapping-Block (42), der mit dem Eingangsanschluss (40) verbunden ist, um PSK-Symbole zu erzeugen, die modifiziert worden sind durch Reduzieren der Amplitude mindestens eines Konstellationszustands des PSK-Konstellationsmusters, wobei das genannte Konstellationsmuster mindestens einen Konstellationspunkt mit niedrigerer Energie als die restlichen Konstellationspunkte aufweist; eine Auswahleinrichtung (43), die mit den ersten und zweiten Mapping-Blöcken verbunden ist, um selektiv nicht modifizierte oder modifizierte Symbole zu empfangen, gesteuert durch die Steuerung einer Parameter gesteuerten Synchronisationseinrichtung (44), mit einer Phasenrotationseinrichtung (46), die mit der Auswahleinrichtung verbunden ist, um die ausgewählten Symbole von der Auswahleinrichtung zu empfangen, um die Konstellation des ausgewählten Symbols zu drehen, gesteuert durch einen Pseudozufalls-Bitfolgegenerator (45), der mit der Phasenrotationseinrichtung verbunden ist, und gesteuert durch die Synchronisationseinrichtung, um an einen Ausgangsanschluss modifizierte und nicht modifizierte Symbole mit pseudozufällig gedrehten Konstellationen auszugeben.

19. Sender nach Anspruch 18, wobei der erste Mapping-Block (41), der zweite Mapping-Block (42) und die Auswahleinrichtung (43) durch einen programmierbaren Mapping-Block ersetzt werden, zum selektiven Erzeugen nicht modifizierter PSK-Symbole oder modifizierte PSK-Symbole durch Nullstellung der Energie mindestens eines Konstellationszustands einer PSK-Konstellation gesteuert durch die Parameter gesteuerte Synchronisationseinrichtung.

20. Sender nach Anspruch 18 oder 19, wobei eine Parametersteuerung der Parameter gesteuerten Synchronisationseinrichtung (44) ein vorbestimmtes Verhältnis von modifizierten Symbolen zu nicht modifizierten Symbolen darstellt.

21. Empfänger zum Einsatz in einem System nach Anspruch 1 zur Trägerwiederherstellung aus einem phasenumgetasteten Übertragungssignal mit einem asymmetrischen Konstellationsmuster, wobei mindestens ein Konstellationspunkt eine niedrigere Energie aufweist als die restlichen Konstellationspunkt und ohne oder mit einer ausreichend schwachen Trägersignalkomponente, um im Wesentlichen Interferenzen mit gleichzeitig übertragenen Diensten zu verhindern, wobei der Empfänger eine Derotationseinrichtung (51) für den Empfang eines komplexen Signals und für die Implementierung von Rotationen umfasst, die Vielfache von π/4 zur Eingabe in eine Trägerwiederherstellungsschleifeneinrichtung darstellen, wobei die Derotationseinrichtung durch eine Pseudozufalls-Bitfolge-Generatoreinrichtung (55) gesteuert wird, gesteuert durch eine Synchronisations-Detektoreinrichtung (54), gesteuert durch eine Stärkendetektoreinrichtung (52) zum Detektieren der Stärken empfangener Symbole, um eine vorbestimmte Sequenz modifizierter und nicht modifizierter Symbole zu detektieren.

22. Empfänger nach Anspruch 21, wobei die Trägerwiederherstellungsschleifeneinrichtung einen komplexen Multiplizierer (56) mit einer phasensynchronisierten Regelschleife (59, 60, 61) umfasst, eine Aufhebungseinrichtung für periodische Störungen (57, 58), eine erste Auswahleinrichtung (62), gesteuert durch die Synchronisations-Detektoreinrichtung (54) zum selektiven Leiten des Signals zu einem ersten Demapping-Block (63) zum Demapping nicht modifizierter Symbole oder einem zweiten Demapping-Block (64) zum Demapping modifizierter Symbole, und eine zweite Auswahleinrichtung (65), gesteuert durch die Synchronisations-Detektoreinrichtung (54) zum selektiven Empfangen von Ausgaben von den ersten und zweiten Demapping-Blöcken und zum Ausgeben eines empfangenen Symbols an einen Ausgangsanschluss (66).

23. Empfänger nach Anspruch 22, wobei die erste Auswahleinrichtung (62), der erste Demapping-Block (63), der zweite Demapping-Block (64) und die zweite Auswahleinrichtung (65) durch einen programmierbaren Demapping-Block ersetzt werden, gesteuert durch die Synchronisations-Detektoreinrichtung (54) zum selektiven Demapping nicht modifizierter Symbole oder zum Demapping modifizierter Signale.

24. Empfänger nach Anspruch 22 oder 23, wobei die Aufhebungseinrichtung für periodische Störungen einen Phasendetektor (57) umfasst, der einen Phasenschieber (58) steuert, und wobei die Ausgabe des Phasendetektors zu dem Phasenschieber geleitet wird, um periodische Störungen aufzuheben.

25. Verfahren zur Kommunikation eines digitalen Signals, wobei das Verfahren die folgenden Schritte umfasst:
a) das Modulieren durch Phasenumtastung des digitalen Signals mit einem asymmetrischen Konstellationsmuster zur Erzeugung eines phasenumgetasteten Signals und eines Trägersignals, wobei das genannte Konstellationsmuster mindestens einen Konstellationspunkt einer niedrigeren Energie als die restlichen Konstellationspunkte aufweist;
b) das Verarbeiten des phasenumgetasteten Signals und des Trägersignals, um ein Übertragungssignal ohne oder mit einer ausreichend schwachen Trägersignalkomponente zu erzeugen, um im Wesentlichen Interferenzen mit gleichzeitig übertragenen Diensten zu verhindern;
c) das Übertragen des Übertragungssignals an einen Empfänger;
d) das Empfangen des phasenumgetasteten Signals an dem Empfänger und das erneute Erzeugen eines ausreichend starken Trägersignals aus dem Übertragungssignal, um eine Demodulation zu ermöglichen; und
e) das Einsetzen des starken Trägersignals für die Phasenverriegelung des Empfängers zum Demodulieren des phasenumgetasteten Signals.

26. Verfahren nach Anspruch 25, wobei der mindestens eine Konstellationspunkt im Wesentlichen null Energie aufweist.

27. Verfahren nach Anspruch 25 oder 26, wobei der Schritt des Verarbeitens des phasenumgetasteten Signals und des Trägersignals das periodische Verändern des Mappings der asymmetrischen Konstellation umfasst, um die Trägersignalkomponente des Übertragungssignals zu reduzieren.

28. Verfahren nach Anspruch 27, wobei der Schritt des Verarbeitens des phasenumgetasteten Signals und des Trägersignals das Verändern des Mappings der asymmetrischen Konstellation für jedes übertragene Symbol umfasst.

29. Verfahren nach Anspruch 27 oder 28, wobei der Schritt des Verarbeitens des phasenumgetasteten Signals und des Trägersignals das Verändern des Mappings gemäß einer Pseudozufalls-Bitfolge umfasst.

30. Verfahren nach einem der Ansprüche 27 bis 29, wobei der Schritt des Verarbeitens des phasenumgetasteten Signals und des Trägersignals das Verändern des Mappings durch Phasenrotation umfasst.

31. Verfahren nach einem der Ansprüche 25 bis 30, wobei der Schritt des Verarbeitens des phasenumgetasteten Signals und des Trägersignals das Einfügen zur Übertragung modifizierter Symbole aus den Symbolen umfasst, die durch den Einsatz des asymmetrischen Konstellationsmusters modifiziert worden sind.

32. Verfahren nach Anspruch 31, wobei der Schritt des Verarbeitens des phasenumgetasteten Signals und des Trägersignals das Auswählen eines Verhältnisses modifizierter Symbole zu nicht modifizierten Symbolen zur Optimierung der Leistung des Verfahrens umfasst.

33. Verfahren nach einem der Ansprüche 25 bis 32, wobei der Schritt des Empfangens den Schritt des Synchronisierens der empfangenden Einrichtung mit der sendenden Einrichtung umfasst, und zwar durch die Übertragung einer vorbestimmten Sequenz von modifizierten und nicht modifizierten Symbolen von der übertragenden Einrichtung zu der empfangenden Einrichtung.

34. Verfahren nach einem der Ansprüche 25 bis 33, wobei der Schritt der Modulation des digitalen Signals durch Phasenumtastung mit einem asymmetrischen Konstellationsmuster folgendes umfasst: den Einsatz eines ersten Mapping-Blocks (41), der mit einem Eingangsanschluss (40) verbunden ist, um nicht modifizierte PSK-Symbole zu erzeugen, und den Einsatz eines zweiten Mapping-Blocks (42), der mit dem Eingangsanschluss verbunden ist, um durch die Nullstellung mindestens eines Konstellationszustands der PSK-Konstellation modifizierte PSK-Symbole zu erzeugen; und wobei der Schritt der Verarbeitung des phasenumgetasteten Signals und des Trägersignals den Einsatz einer Auswahleinrichtung (43) umfasst, die mit den ersten und zweiten Mapping-Blöcken verbunden ist, um selektiv nicht modifizierte oder modifizierte Symbole unter der Steuerung einer Parameter gesteuerten Synchronisationseinrichtung (44) zu empfangen, den Einsatz einer Phasenrotationseinrichtung (46), die mit der Auswahleinrichtung (43) verbunden ist, um ausgewählte Symbole von der Auswahleinrichtung zu empfangen, um die Konstellation des ausgewählten Symbols zu drehen, gesteuert durch einen Pseudozufalls-Bitfolgegenerator (45), der mit der Phasenrotationseinrichtung verbunden ist, und gesteuert durch die Synchronisationseinrichtung, um an einen Ausgangsanschluss (47) modifizierte und nicht modifizierte Symbole mit pseudozufällig gedrehten Konstellationen auszugeben.

35. Verfahren nach einem der Ansprüche 25 bis 33, wobei der Schritt der Modulation des digitalen Signals durch Phasenumtastung mit einem asymmetrischen Konstellationsmuster folgendes umfasst: den Einsatz eines programmierbaren Mapping-Blocks, gesteuert durch die Parameter gesteuerte Synchronisationseinrichtung (44), der mit einem Eingangsanschluss (40) verbunden ist, um selektiv nicht modifizierte PSK-Symbole oder durch die Nullstellung mindestens eines Konstellationszustands der PSK-Konstellation modifizierte PSK-Symbole zu erzeugen; und wobei der Schritt der Verarbeitung des phasenumgetasteten Signals und des Trägersignals das selektive Empfangen nicht modifizierter Symbole oder modifizierter Symbole unter Verwendung einer Phasenrotationseinrichtung (46) umfasst, die mit dem programmierbaren Mapping-Block verbunden ist, um die ausgewählten Symbole von dem programmierbaren Mapping-Block zu empfangen, um die Konstellation des ausgewählten Symbols zu drehen, gesteuert durch einen Pseudozufalls-Bitfolgegenerator (45), der mit der Phasenrotationseinrichtung verbunden ist, und gesteuert durch die Synchronisationseinrichtung (44), und wobei an einen Ausgangsanschluss (47) modifizierte und nicht modifizierte Symbole mit pseudozufällig gedrehten Konstellationen ausgegeben werden.

36. Verfahren nach Anspruch 34 oder 35, wobei der Schritt des selektiven Empfangens nicht modifizierter oder modifizierter Symbole gesteuert durch die Parameter gesteuerte Synchronisationseinrichtung (44) den Einsatz eines vorbestimmten Verhältnisses von modifizierten Symbolen zu nicht modifizierten Symbolen als ein Parameter zur Steuerung der Parameter gesteuerten Synchronisationseinrichtung umfasst.

37. Verfahren nach einem der Ansprüche 25 bis 36, wobei der Schritt des Empfangens den Einsatz einer Derotationseinrichtung (51) für den Empfang eines komplexen Signals und für die Implementierung von Rotationen umfasst, die Vielfache von π/4 zur Eingabe in eine Trägerwiederherstellungsschleifeneinrichtung darstellen.

38. Verfahren nach Anspruch 37, wobei der Schritt des Einsatzes der Derotationseinrichtung den Einsatz der Derotationseinrichtung (51) gesteuert durch die Pseudozufalls-Bitfolge-Generatoreinrichtung (55) umfasst, gesteuert durch eine Synchronisations-Detektoreinrichtung (54), die durch eine Stärkendetektoreinrichtung (52) gesteuert wird, um die Stärke empfangener Symbole zu detektieren, um eine vorbestimmte Sequenz modifizierter und nicht modifizierter Symbole zu detektieren.

39. Verfahren nach Anspruch 37 oder 38, wobei der Schritt der Eingabe in die Trägerwiederherstellungsschleifeneinrichtung die Eingabe in die Trägerwiederherstellungsschleifeneinrichtung umfasst, die einen komplexen Multiplizierer (56) mit einer phasensynchronisierten Regelschleife (59, 60, 61) umfasst, eine Aufhebungseinrichtung für periodische Störungen (57, 58), eine erste Auswahleinrichtung (54), gesteuert durch die Synchronisations-Detektoreinrichtung (54) zum selektiven Leiten des Signals zu einem ersten Demapping-Block (63) zum Demapping nicht modifizierter Symbole oder einem zweiten Demapping-Block (64) zum Demapping modifizierter Symbole, und eine zweite Auswahleinrichtung (65), gesteuert durch die Synchronisations-Detektoreinrichtung (54) zum selektiven Empfangen von Ausgaben von den ersten und zweiten Demapping-Blöcken und zum Ausgeben eines empfangenen Symbols an einen Ausgangsanschluss (66).

40. Verfahren nach Anspruch 39, wobei der erste Demapping-Block (63), der zweite Demapping-Block (64) und die zweite Auswahleinrichtung (65) durch einen programmierbaren Demapping-Block ersetzt werden, zum selektiven Demapping nicht modifizierter Symbole oder zum Demapping modifizierter Signale, gesteuert durch die Synchronisations-Detektoreinrichtung.

41. Verfahren nach Anspruch 39 oder 40, wobei die Aufhebungseinrichtung für periodische Störungen einen Phasendetektor (57) umfasst, der einen Phasenschieber (58) steuert, wobei die Ausgabe des Phasendetektors zu dem Phasenschieber geleitet wird, um periodische Störungen aufzuheben.

## Revendications

1. Système pour communiquer un signal numérique, le système comprenant :
a) des moyens de modulation par déplacement de phase pour moduler le signal numérique avec une configuration en constellation asymétrique pour produire un signal de modulation par déplacement de phase et un signal porteur, ladite configuration en constellation ayant au moins un point de constellation d'une énergie inférieure aux points de constellation restants ;
b) des moyens de traitement de signal (40-47) pour traiter le signal de modulation par déplacement de phase et le signal porteur afin de produire un signal de transmission sans, ou avec un suffisamment faible, composant de signal porteur pour sensiblement empêcher l'interférence avec les services co-transmis ;
c) des moyens de transmission pour transmettre le signal de transmission à un récepteur ;
d) des moyens de réception (50-66) au niveau du récepteur pour recevoir le signal de modulation par déplacement de phase et régénérer un signal porteur suffisamment fort à partir du signal de transmission pour permettre la démodulation ; et
e) des moyens de démodulation pour utiliser le signal porteur pour effectuer un verrouillage de phase du récepteur pour démoduler le signal de modulation par déplacement de phase.

2. Système selon la revendication 1, dans lequel l'au moins un point de constellation a une énergie sensiblement égale à zéro.

3. Système selon la revendication 1 ou 2, dans lequel les moyens de traitement de signal sont adaptés pour périodiquement changer le mappage de la constellation asymétrique pour réduire le composant de signal porteur du signal de transmission.

4. Système selon la revendication 3, dans lequel les moyens de traitement de signal sont adaptés pour changer le mappage de la constellation asymétrique pour chaque symbole transmis.

5. Système selon la revendication 3 ou 4, dans lequel le système de traitement de signal est adapté pour changer le mappage selon une séquence binaire pseudo-aléatoire.

6. Système selon l'une quelconque des revendications 3 à 5, dans lequel les moyens de traitement de signal sont adaptés pour changer le mappage par transposition de phases.

7. Système selon l'une quelconque des revendications précédentes, dans lequel les moyens de traitement de signal sont adaptés pour l'insertion à des fins de transmission de symboles non modifiés parmi les symboles modifiés par l'utilisation de la configuration en constellation asymétrique.

8. Système selon la revendication 7, dans lequel les moyens de traitement de signal sont adaptés pour permettre une variation du rapport des symboles modifiés sur les symboles non modifiés afin d'optimiser la performance du système.

9. Système selon l'une quelconque des revendications précédentes, dans lequel les moyens de réception peuvent être synchronisés avec les moyens de transmission par la transmission des moyens de transmission aux moyens de réception d'une séquence prédéterminée des symboles modifiés et non modifiés.

10. Système selon l'une quelconque des revendications précédentes, dans lequel les moyens de traitement de signal comprennent : un premier bloc de mappage (41) connecté à un port d'entrée (40) pour produire des symboles PSK non modifiés et un second bloc de mappage (42) connecté au port d'entrée pour produire des symboles PSK modifiés par la mise à zéro d'au moins un état de constellation de la constellation PSK ; des moyens de sélection (43) connectés aux premier et second blocs de mappage pour sélectivement recevoir des symboles non modifiés ou modifiés sous le contrôle de moyens de synchronisation contrôlés par paramètres, des moyens de rotation de phase (46) connectés aux moyens de sélection pour recevoir des symboles sélectionnés du sélecteur pour tourner la constellation du symbole sélectionné sous le contrôle d'un générateur de séquence de bits pseudo-aléatoire (45) connecté au rotateur de phase et contrôlé par les moyens de synchronisation (44) pour transmettre à un port de sortie (47) des symboles modifiés et non modifiés ayant des constellations tournées de façon pseudo-aléatoire.

11. Système selon l'une quelconque des revendications 1 à 9, dans lequel, les moyens de traitement de signal comprennent : un bloc de mappage programmable connecté à un port d'entrée (40) pour sélectivement produire des symboles PSK non modifiés ou des symboles PSK modifiés par la mise à zéro d'au moins un état de constellation de la constellation PSK ; sous le contrôle de moyens de synchronisation contrôlés par paramètres (44), des moyens de rotation de phase (46) connectés au bloc de mappage programmable pour recevoir des symboles du bloc de mappage programmable afin de tourner la constellation des symboles sous le contrôle d'un générateur de séquence de bits pseudo-aléatoire connecté au rotateur de phase et contrôlé par les moyens de synchronisation (44) à transmettre à un port de sortie (47) des symboles modifiés et non modifiés ayant des constellations tournées de façon pseudo-aléatoire.

12. Système selon la revendication 10 ou 11, dans lequel un paramètre contrôlant les moyens de synchronisation contrôlés par paramètres (44) est un rapport prédéterminé des symboles modifiés sur des symboles non modifiés.

13. Système selon l'une quelconque des revendications précédentes, dans lequel les moyens de réception comprennent des moyens de dérotation (51) pour recevoir un signal complexe et pour mettre en oeuvre des rotations qui sont des multiples de π/4 à des fins d'entrée dans les moyens de boucle de récupération de porteuse.

14. Système selon la revendication 13, dans lequel les moyens de dérotation (51) sont sous le contrôle de moyens de génération de séquence de bit pseudo-aléatoire (55), contrôlés par les moyens de détection de synchronisation (54) contrôlés par les moyens de détection de magnitude (52) pour détecter la magnitude des symboles reçus pour détecter une séquence prédéterminée de symboles modifiés et non modifiés.

15. Système selon la revendication 13 ou 14, dans lequel les moyens de boucle de récupération de porteuse comprennent un multiplicateur complexe (56) avec une boucle d'asservissement à verrouillage de phase (59, 60, 61), un annulateur de bruit de modèle (57, 58), un premier sélecteur (54) sous le contrôle des moyens de détection de synchronisation pour sélectivement acheminer le signal vers l'un d'un premier bloc de dé-mappage (63) pour dé-mapper les symboles non modifiés et un second bloc de dé-mappage (64) pour dé-mapper les symboles modifiés et un second sélecteur (65) sous le contrôle des moyens de détection de synchronisation (54) pour sélectivement recevoir la sortie des premier et second blocs de dé-mappage et transmettre un symbole reçu à un port de sortie (66).

16. Système selon la revendication 13 ou 14, dans lequel, la boucle de récupération de porteuse comprend un multiplicateur complexe (56) avec une boucle d'asservissement à verrouillage de phase (59; 60, 61), un annulateur de bruit de modèle (57, 58), un bloc de dé-mappage programmable sous le contrôle du détecteur de synchronisation (54) pour sélectivement dé-mapper des symboles non modifiés ou dé-mapper des symboles modifiés et transmettre le symbole dé-mappé à un port de sortie.

17. Système selon la revendication 15 ou 16, dans lequel l'annulateur de bruit de modèle comprend un détecteur de phase (57) contrôlant un déphaseur (58), et la sortie du détecteur de phase est transmise au déphaseur pour annuler le bruit de modèle.

18. Emetteur à utiliser dans un système selon la revendication 1 pour générer un signal à modulation par déplacement de phase (en anglais « Phase Shift Keyed » - PSK) et un signal porteur pour transmettre un signal de transmission sans, ou avec un suffisamment faible, composant de signal porteur pour sensiblement empêcher l'interférence avec les services co-transmis, l'émetteur comprenant : un premier bloc de mappage (41) connecté à un port d'entrée pour produire des symboles PSK non modifiés et un second bloc de mappage (42) connecté au port d'entrée (40) pour produire des symboles PSK modifiés en réduisant l'amplitude d'au moins un état de constellation de la configuration de constellation PSK, ladite configuration de constellation ayant au moins un point de constellation d'une énergie inférieure aux points de constellation restants ; des moyens de sélection (43) connectés aux premier et second blocs de mappage pour sélectivement recevoir les symboles non modifiés ou modifiés sous le contrôle de moyens de synchronisation contrôlés par paramètres (44), des moyens de rotation de phase (46) connectés aux moyens de sélection pour recevoir les symboles sélectionnés du sélecteur pour tourner la constellation dû symbole sélectionné sous le contrôle d'un générateur de séquence dé bits pséudo-aléatoire (45) connecté au rotateur de phase et contrôlé par les moyens de synchronisation pour transmettre à un port de sortie des symboles modifiés et non modifiés ayant des constellations tournées de façon pseudo-aléatoire.

19. Emetteur selon la revendication 18, dans lequel le premier bloc de mappage (41), le second bloc de mappage (42) et le sélecteur (43) sont remplacés par un bloc de mappage programmable pour sélectivement produire des symboles PSK non modifiés ou des symboles PSK modifiés pour mettre à zéro l'énergie d'au moins un état de constellation d'une constellation PSK sous le contrôle des moyens de synchronisation contrôlés par paramètres.

20. Emetteur selon la revendication 18 ou 19, dans lequel un paramètre contrôlant les moyens de synchronisation contrôlés par paramètres (44) est un rapport prédéterminé des symboles modifiés sur des symboles non modifiés.

21. Récepteur à utiliser dans un système selon la revendication 1, pour la récupération de porteuse depuis un signal de transmission à modulation par déplacement de phase ayant une configuration de constellation asymétrique avec au moins un point de constellation ayant une énergie inférieure aux points de constellation restants et sans, ou avec un suffisamment faible, composant de signal porteur, pour sensiblement empêcher l'interférence avec des services co-transmis, le récepteur comprenant des moyens de dérotation (51) pour recevoir un signal complexe et pour mettre en oeuvre des rotations qui sont des multiples de π/4 à entrer dans des moyens de boucle de récupération de porteuse, dans lequel les moyens de dérotation sont sous le contrôle de moyens de génération de séquence de bit pseudo-aléatoire (55), contrôlés par un moyens de détection de synchronisation (54) contrôlés par des moyens de détection de magnitude (52) pour détecter les magnitudes des symboles reçus pour détecter une séquence prédéterminée de symboles modifiés et non modifiés.

22. Récepteur selon la revendication 21, dans lequel la boucle de récupération de porteuse comprend un multiplicateur complexe (56) avec une boucle d'asservissement à verrouillage de phase (59, 60, 61), un annulateur de bruit de modèle, un premier sélecteur (62) sous le contrôle des moyens de détection de synchronisation (54) pour sélectivement acheminer le signal vers l'un d'un premier bloc de dé-mappage (63) pour dé-mapper les symboles non modifiés et un second bloc de dé-mappage (64) pour dé-mapper les symboles modifiés et un second sélecteur (65) sous le contrôle des moyens de détection de synchronisation (54) pour sélectivement recevoir une sortie des premier et second blocs de dé-mappage et transmettre un symbole reçu à un port de sortie (66).

23. Récepteur selon la revendication 22, dans lequel le premier sélecteur (62), le premier bloc de dé-mappage (63), le second bloc de dé-mappage (64) et le second sélecteur (65) sont remplacés par un bloc de dé-mappage programmable sous le contrôle des moyens de détection de synchronisation (54), pour sélectivement dé-mapper les symboles non modifiés ou dé-mapper les signaux modifiés.

24. Récepteur selon la revendication 22 ou 23, dans lequel l'annulateur de bruit de modèle comprend un détecteur de phase (57) contrôlant un déphaseur (58), dans lequel la sortie du détecteur de phase est transmise au déphaseur pour annuler le bruit de modèle.

25. Procédé pour communiquer un signal numérique, le procédé comprenant les étapes consistant à :
a) moduler par déplacement de phase le signal numérique avec une configuration en constellation asymétrique pour produire un signal de modulation par déplacement de phase et un signal porteur, ladite configuration en constellation ayant au moins un point de constellation d'une énergie inférieure aux points de constellation restants ;
b) traiter le signal de modulation par déplacement de phase et le signal porteur pour produire un signal de transmission sans, ou avec un faible, composant de signal porteur pour sensiblement empêcher l'interférence avec les services co-transmis ;
c) transmettre le signal de transmission à un récepteur ;
d) recevoir au niveau du récepteur le signal de modulation par déplacement de phase et régénérer un signal porteur suffisamment fort à partir du signal de transmission pour permettre la démodulation ; et
e) utiliser le signal porteur fort pour effectuer un verrouillage de phase du récepteur pour démoduler le signal de modulation par déplacement de phase.

26. Procédé selon la revendication 25, dans lequel l'au moins un point de constellation a une énergie sensiblement égale à zéro.

27. Procédé selon la revendication 25 à 26, dans lequel l'étape de traitement du signal de modulation par déplacement de phase et du signal porteur comprend l'étape consistant à périodiquement changer le mappage de la constellation asymétrique pour réduire le composant de signal porteur du signal de transmission.

28. Procédé selon la revendication 27, dans lequel l'étape de traitement du signal de modulation par déplacement de phase et du signal porteur comprend l'étape consistant à changer le mappage de la constellation asymétrique pour chaque symbole transmis.

29. Procédé selon la revendication 27 ou 28, dans lequel l'étape de traitement du signal de modulation par déplacement de phase et du signal porteur comprend l'étape consistant à changer le mappage selon une séquence binaire pseudo-aléatoire.

30. Procédé selon l'une quelconque des revendications 27 à 29, dans lequel l'étape de traitement du signal de modulation par déplacement de phase et du signal porteur comprend l'étape consistant à changer le mappage par transposition de phases.

31. Procédé selon l'une quelconque des revendications 25 à 30, dans lequel l'étape de traitement du signal de modulation par déplacement de phase et du signal porteur comprend l'étape consistant à insérer à des fins de transmission des symboles non modifiés parmi les symboles modifiés par l'utilisation de la configuration en constellation asymétrique.

32. Procédé selon la revendication 31, dans lequel l'étape de traitement du signal de modulation par déplacement de phase et du signal porteur comprend l'étape consistant à sélectionner un rapport des symboles modifiés sur des symboles non modifiés pour optimiser la performance du procédé.

33. Procédé selon l'une quelconque des revendications 25 à 32, dans lequel l'étape de réception comprend l'étape consistant à synchroniser les moyens de réception avec les moyens de transmission par la transmission des moyens de transmission aux moyens de réception d'une séquence prédéterminée de symboles modifiés et non modifiés.

34. Procédé selon l'une quelconque des revendications 25 à 33, dans lequel l'étape de modulation par déplacement de phase du signal numérique avec une configuration en constellation asymétrique comprenant les étapes consistant à : utiliser un premier bloc de mappage (41) connecté à un port d'entrée (40) pour produire les symboles PSK non modifiés et utiliser un second bloc de mappage (42) connecté au port d'entrée (40) pour produire les symboles PSK modifiés par la mise à zéro d'au moins un état de constellation de la constellation PSK ; et l'étape de traitement du signal de modulation par déplacement de phase et du signal porteur comprend les étapes consistant à utiliser des moyens de sélection (43) connectés aux premier et second blocs de mappage pour sélectivement recevoir des symboles non modifiés ou modifiés sous le contrôle de moyens de synchronisation contrôlés par paramètres (44), à utiliser les moyens de rotation de phase (46) connectés aux moyens de sélection (43) pour recevoir les symboles sélectionnés du sélecteur afin de tourner la constellation du symbole sélectionné sous le contrôle d'un générateur de séquence de bits pseudo-aléatoire (45) connecté au rotateur de phase et contrôlé par les moyens de synchronisation et à transmettre à un port de sortie (47) des symboles modifiés et non modifiés ayant des constellations tournées de façon pseudo-aléatoire.

35. Procédé selon l'une quelconque des revendications 25 à 33, dans lequel, l'étape de modulation par déplacement de phase du signal numérique avec une configuration en constellation asymétrique comprend les étapes consistant à : utiliser un bloc de mappage programmable, sous le contrôle de moyens de synchronisation contrôlés par paramètres (44), connectés à un port d'entrée (40) pour sélectivement produire des symboles PSK non modifiés ou pour produire des symboles PSK modifiés par la mise à zéro d'au moins un état de constellation de la constellation PSK ; et l'étape de traitement du signal de modulation par déplacement de phase et du signal porteur comprend les étapes consistant à sélectivement recevoir des symboles non modifiés ou modifiés en utilisant des moyens de rotation de phase (46) connectés au bloc de mappage programmable pour recevoir les symboles sélectionnés du bloc de mappage pour tourner la constellation du symbole sélectionné sous le contrôle d'un générateur de séquence de bits pseudo-aléatoire (45) connecté au rotateur de phase et contrôlé par les moyens de synchronisation (44) et transmettant à un port de sortie (47) des symboles modifiés et non modifiés ayant des constellations tournées de façon pseudo-aléatoire.

36. Procédé selon la revendication 34 ou 35, dans lequel l'étape de réception sélective de symboles non modifiés ou modifiés sous le contrôle de moyens de synchronisation contrôlés par paramètres (44) comprend l'étape consistant à utiliser un rapport prédéterminé des symboles modifiés sur des symboles non modifiés comme paramètre pour contrôler les moyens de synchronisation contrôlés par paramètres.

37. Procédé selon l'une quelconque des revendications 25 à 36, dans lequel l'étape de réception comprend l'étape consistant à utiliser des moyens de dérotation (51) pour recevoir un signal complexe et pour mettre en oeuvre des rotations qui sont des multiples de π/4 pour les entrer dans des moyens de boucle de récupération de porteuse.

38. Procédé selon la revendication 37, dans lequel l'étape d'utilisation des moyens de dérotation comprend l'étape consistant à utiliser les moyens de dérotation (51) sous le contrôle de moyens de génération de séquence de bit pseudo-aléatoire (55), contrôlés par des moyens de détection de synchronisation (54) contrôlés par des moyens de détection de magnitude (52) pour détecter des magnitudes de symboles reçus pour détecter une séquence prédéterminée de symboles modifiés et non modifiés.

39. Procédé selon la revendications 37 ou 38, dans lequel l'étape d'entrée dans les moyens de boucle de récupération de porteuse comprend l'étape consistant à entrer dans des moyens de boucle de récupération de porteuse comprenant un multiplicateur complexe (56) avec une boucle d'asservissement à verrouillage de phase (59, 60, 61), un annulateur de bruit de modèle (57, 58), un premier sélecteur (62) sous le contrôle du détecteur de synchronisation (54) pour sélectivement acheminer le signal vers l'un d'un premier bloc de dé-mappage (62) pour dé-mapper des symboles non modifiés et un second bloc de dé-mappage (64) pour dé-mapper des symboles modifiés et un second sélecteur (65) sous le contrôle du détecteur de synchronisation (54) pour sélectivement recevoir la sortie des premier et second blocs de dé-mappage et transmettre un symbole reçu à un port de sortie (66).

40. Procédé selon la revendication 39, dans lequel le premier bloc de dé-mappage (63), le second bloc de dé-mappage (64) et le second sélecteur (65) sont remplacés par un bloc de dé-mappage programmable pour sélectivement dé-mapper les symboles non modifiés ou modifiés sous le contrôle des moyens de détection de synchronisation.

41. Procédé selon la revendication 39 ou 40, dans lequel l'annulateur de bruit de modèle comprend un détecteur de phase (57) contrôlant un déphaseur (58), dans lequel la sortie du détecteur de phase est transmise au déphaseur pour annuler le bruit de modèle.
